# FASCICULE DE BREVET EUROPEEN

(11) **EP 3 488 299 B1**
(45) Date de publication et mention de la délivrance du brevet: **01.07.2020**
(21) Numéro de dépôt: 17742699.6
(22) Date de dépôt: 12.07.2017
(51) Int. Cl.: G04R 60/08, G04G 21/04

(54) **ÉLÉMENT D'HABILLAGE D'ASPECT MÉTALLIQUE À SYSTÈME DE COMMUNICATION INTÉGRÉ**
AUSSTATTUNGSSELEMENT MIT METALLEFFEKT MIT EINEM INTEGRIERTEN KOMMUNIKATIONSSYSTEM
TIMEPIECE EXTERNAL ELEMENT WITH METALLIC APPEARANCE, WITH INTEGRATED COMMUNICATION SYSTEM

(30) Priorité: 19.07.2016 EP 16180207
(43) Date de publication de la demande: 29.05.2019
(73) Titulaire: The Swatch Group Research and Development Ltd, 2074 Marin (CH)
(72) Inventeur: FERRI, Yvan, 1004 Lausanne (CH); CURCHOD, Loïc, 1004 Lausanne (CH)
(74) Mandataire: ICB SA
(86) Numéro de dépôt international: PCT/EP2017/067593
(87) Numéro de publication internationale: WO 2018/015249

(56) Documents cités:
- EP-A1- 1 274 150
- EP-A2- 0 322 346
- KR-B1- 101 414 104
- US-A- 5 798 984

## Description

La présente invention concerne un élément d'habillage d'une pièce d'horlogerie, réalisé en un premier matériau et présentant un logement comprenant un système de communication.

### ARRIÈRE-PLAN TECHNOLOGIQUE

Avec l'arrivée des montres comportant des fonctions de communication sans fil à courte distance du type RFID, il a été nécessaire de trouver des espaces pour placer les systèmes de communication. Une solution a été d'intégrer ces systèmes de communication à des éléments de la montre, par exemple la boite, la glace, le joint de glace, ou encore la lunette.

Toutefois, ce type de construction est difficilement possible si ces éléments sont en métal massif. En effet, des perturbations électromagnétiques viendraient dégrader fortement, voire empêcher la communication. Intégrer le système de communication à un élément non métallique permet d'éviter les interférences, mais ne permet pas d'avoir ni un aspect visuel qui serait le même que si cet élément était en métal massif. Par aspect visuel, on entend un éclat et une couleur métallique.

On connait le document EP 1 274 150 A1, décrivant un élément d'habillage d'une montre, de forme essentiellement annulaire, ajusté sur la lunette de la montre, et présentant une ouverture dans laquelle est située une antenne d'un système de communication. Non seulement cet élément d'habillage est en matériau métallique, mais il a un impact significatif sur le design de la montre par la protubérance qu'il forme.

### RÉSUMÉ DE L'INVENTION

L'invention a pour but de pallier les inconvénients de l'art antérieur. A cet effet, l'invention concerne un élément d'habillage d'une pièce d'horlogerie ou de joaillerie, comportant un corps réalisé dans une céramique isolante, ledit corps étant agencé pour comprendre un logement, comprenant en outre un système de communication sans fil agencé dans le logement et en ce qu'au moins une partie de la surface dudit élément d'habillage présente une couche d'aspect visuel métallique, ladite couche étant obtenue par carburation, nitruration ou une combinaison de ces deux procédés.

Cet élément d'habillage présente l'avantage d'être réalisé en un matériau isolant de sorte qu'il ne perturbe pas le système de communication sans fil, tout en comportant une couche de surface présentant un aspect visuel métallique de sorte que ledit élément d'habillage s'accorde avec l'objet/le bracelet sur lequel il est monté. L'aspect extérieur de la pièce d'horlogerie ou de joaillerie n'est donc pas modifié par rapport à une pièce classique qui ne comporterait pas de système de communication. On note que le procédé de carburation/nitruration modifie la résistance électrique de la surface de l'élément d'habillage en rendant cet élément d'habillage conducteur en surface (la résistance ohmique est comprise entre 20 et 80 Ohms), mais dans une épaisseur suffisamment fine pour que l'impact sur le système de communication soit négligeable, surtout pour les fréquences inférieures à 1 gigahertz. Naturellement, hormis la couche de surface, l'élément d'habillage reste isolant.

L'invention a également pour objet une pièce d'horlogerie comprenant un boitier comprenant une carrure fermée par un fond et une glace et munie d'une lunette, caractérisée en ce que la lunette est un élément d'habillage tel que décrit plus haut.

Dans ce cas, la présente invention permet de procurer un système de lunette tournante ou pas, simple à monter, permettant une fonction de communication sans fil du type RFID, et n'affectant pas l'esthétisme d'une montre métallique classique.

D'autres aspects de l'invention sont indiqués dans les revendications dépendantes.

### BRÈVE DESCRIPTION DES FIGURES

Les buts, avantages et caractéristiques du système de lunette selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente une vue générale de la présente invention ;
- les figures 2 et 3 représentent deux vues détaillées de la lunette faisant office d'élément d'habillage selon la présente invention ;
- la figure 4 représente un premier mode de réalisation de la présente invention ;
- la figure 5 représente un second mode de réalisation de la présente invention ;
- les figures 6A et 6B représentent deux autres exemples de réalisation de la lunette selon la présente invention.

### DESCRIPTION DÉTAILLÉE

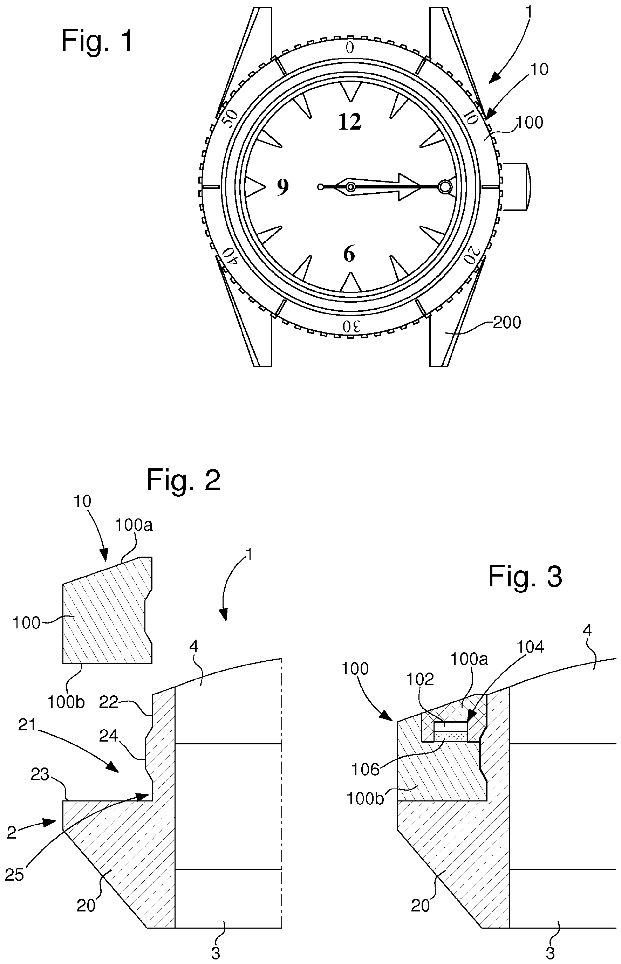

Les figures 1 et 2 montrent un élément d'habillage 10 telle une lunette 100 selon l'invention, cette lunette 100 étant montée sur une pièce d'horlogerie 1 qui comprend un boitier 2 fermé par un fond 3 et une glace 4. Cette lunette 100 est une pièce de forme annulaire qui comprend une face supérieure directement visible par l'utilisateur et une face inférieure.

Cette lunette 100 peut être montée tournante ou non au niveau de la carrure. Dans le cas d'une lunette 100 tournante, un ensemble ressort-crantage ou système à encliquetage (non représenté) est agencé. Cet ensemble ressort-crantage comprend des moyens ressorts et un élément denté. Un des éléments de l'ensemble ressort-crantage sera angulairement solidaire de la carrure alors que l'autre sera angulairement solidaire de la lunette 100 de sorte à permettre l'indexation angulaire de la lunette par rapport à la carrure.

Pour le montage de la lunette 100, la pièce d'horlogerie comprend une carrure 20 dans laquelle un épaulement 21 est agencé, cet épaulement 21 étant défini par une paroi latérale 22 et une base 23. Cet épaulement sert de logement pour la lunette. En général, la paroi latérale 22 comprend une excroissance 24 s'étendant sur l'intégralité du périmètre de la paroi latérale 22. Cette excroissance 24 permet de définir, en coopération avec la base 23 et la paroi 22, une gorge de maintien 25. Cette gorge de maintien 25 permet, lors de l'assemblage à force de la lunette, que celle-ci s'y insère et soit maintenue.

Avantageusement selon l'invention, la lunette 100 est munie d'un système de communication sans fil 102 comme visible à la figure 3.

Dans un exemple préféré, la lunette 100 est réalisée de sorte à comprendre un corps composé d'une partie inférieure 100b (corps principal) et d'une partie supérieure 100a (insert décoratif ou minuterie). Cette partie supérieure 100a et cette partie inférieure 100b sont donc agencées pour s'assembler afin de former ladite lunette. La partie inférieure et la partie supérieure sont astucieusement réalisées de sorte qu'une rainure 104 servant de logement soit présente. Cette rainure peut être agencée sur la partie supérieure ou sur la partie inférieure ou être formée par deux surfaces complémentaires : une sur la partie supérieure et une sur la partie inférieure. Cette rainure est périphérique c'est-à-dire s'étendant sur la périphérie de la lunette, mais n'est pas forcément de dimensions constantes. Cette rainure 104 sert alors de logement afin d'y placer le système de communication sans fil. Ce système de communication sans fil 102 peut comprendre un support c'est-à-dire un circuit imprimé dont la forme est similaire à celle de la rainure 104 agencée sur la lunette, c'est-à-dire une forme de bague. Dans le cas présent, le circuit imprimé sert de substrat pour une antenne en boucles et les différents composants électroniques permettant le fonctionnement du système de communication y sont agencés. Le système de communication peut utiliser le protocole de communication NFC (Near-Field Communication).

Le tout est alors placé dans la rainure 104 de la lunette 100 faisant office de logement.

Pour fermer le tout, un matériau polymère par exemple du type caoutchouc peut être surmoulé directement dans la rainure 104 formant un surmoulage 106 comme visible à la figure 3. Cette opération de surmoulage classique est destinée à recouvrir totalement le système de communication sans fil 102 ayant une forme de bague. Ce recouvrement total permet d'une part d'assurer une bonne étanchéité du système puisque le matériau polymère s'insère dans toute la rainure 104 empêchant ainsi les liquides de s'insérer. Il est également possible de remplir la rainure par d'autres moyens, comme l'injection classique, la sérigraphie ou la distribution (en anglais dispensing) de résine. Une fois la rainure remplie, le système de communication sans fil est ainsi maintenu mécaniquement et peut résister sans problème aux contraintes de chocs et de variations thermiques.

D'autre part, un second avantage de cette réalisation est qu'elle permet de rendre moins aisé l'accès frauduleux aux données souvent cryptées qui sont stockées dans le circuit de communication. En effet, les systèmes de communication 102 pour cette lunette 100 peuvent utiliser des protocoles de communication sans contact de type NFC ou RFID ou autre moyen de télécommunication sans fil. Cette lunette peut donc être utilisée comme 'Tag' ou étiquette électronique pour la reconnaissance (ou le suivi) de produit. Elle peut aussi être utilisée pour des fonctions de paiement ce qui implique que les données embarquées sont sensibles. Par conséquent, le fait de surmouler un polymère sur le système de communication 102 rend plus difficile la récupération d'informations car il devient nécessaire de dissoudre ce polymère avant d'avoir accès au circuit électronique.

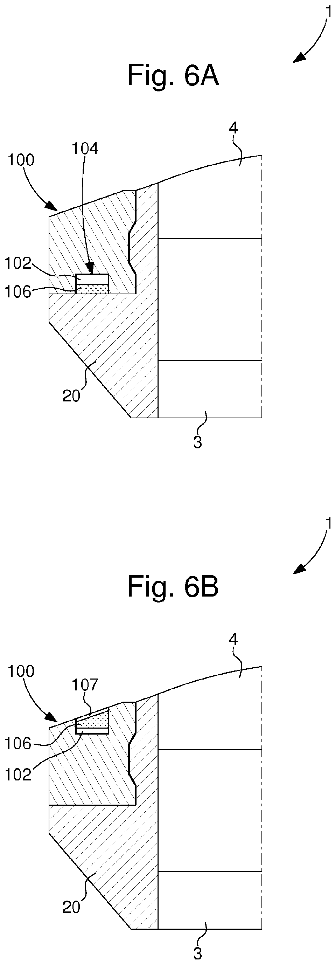

Dans un autre exemple de réalisation visible aux figures 6A et 6B, la lunette 100 se présente sous la forme d'un corps unique muni d'une rainure 104 faisant office de logement pour le système de communication sans fil 102. Cette rainure 104 peut être agencée sur une des faces du corps formant la lunette 100 qu'elle soit visible ou en regard de la carrure 20. Dans le cas où la rainure 104 est agencée sur l'une des faces en regard de la carrure 20, la rainure sera remplie par exemple par un surmoulage 106 en polymère, plastique ou caoutchouc pour recouvrir totalement le système de communication sans fil 102 et assurer une bonne étanchéité. Dans le cas où la rainure 104 est agencée sur l'une des faces visibles de la lunette, cette rainure permet d'y placer le système de communication 102 qui sera ensuite surmoulé avec du caoutchouc ou autre polymère. Il est également possible que la rainure 104 soit fermée via un capot 107 réalisé dans le même matériau que la lunette 100 ou un autre matériau contrastant avec le matériau de la lunette de manière décorative. Ce capot peut être collé ou chassé ou encore brasé sur la lunette.

Selon l'invention, la lunette 100 est réalisée de sorte à éviter de perturber le système de communication sans fil 102. En effet, le montage du système de communication dans une lunette métallique, en acier par exemple, entraine des dysfonctionnements dudit système de communication dû à l'écrantage des champs électromagnétiques (EM) par le matériau métallique de la lunette.

L'invention se propose donc de réaliser la lunette en un matériau isolant électriquement mais présentant tout de même un aspect métallique sur tout ou au moins une partie de sa surface visible. Le matériau choisi ici est un matériau céramique. Un tel matériau est choisi pour ses propriétés isolantes évitant toutes perturbations du circuit de communication sans fil. Mais ce matériau est aussi choisi pour sa résistance mécanique aux rayures notamment ainsi que pour son coté plus noble qu'un matériau plastique, qui peut aussi être envisagé.

La partie inférieure et la partie supérieure sont donc réalisées en matériau céramique.

Astucieusement, la lunette reçoit un traitement lui permettant d'avoir un aspect similaire à celui de la boite de montre. En effet, la boite de montre réalisée en matériau métallique présente un aspect métallique alors que la céramique utilisée pour l'élément d'habillage, ici une lunette, présente un aspect totalement différent qui peut nuire à l'esthétique globale du produit. Ce traitement confère donc un aspect métallique à la surface de la lunette en céramique. Ledit aspect métallique est accompagné de propriétés métalliques, notamment une conductivité non-nulle mais suffisamment faible et sur une épaisseur suffisamment mince pour laisser passer les ondes électromagnétiques reçues et/ou émises par le système de communication sans fil logé dans la lunette.

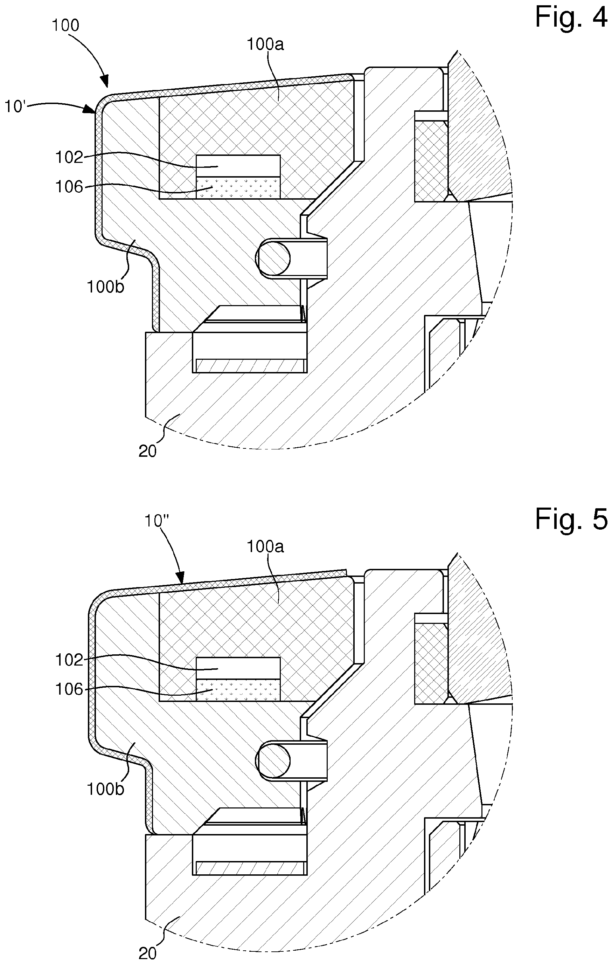

Dans un premier mode de réalisation visible à la figure 4, le traitement de l'élément d'habillage 10 est un traitement de carburation ou de nitruration. Une telle étape de carburation/nitruration consiste à modifier la composition chimique de la pièce (en remplaçant l'oxygène de la céramique d'origine par du carbone ou de l'azote, respectivement). Une telle méthode consiste donc à placer la pièce à carburer/nitrurer, par exemple la lunette 100 constituée d'une partie ou de deux parties 100a et 100b, dans une enceinte dont l'atmosphère contient des atomes de carbone ou d'azote respectivement et à activer par chauffage la surface de la pièce à carburer/nitrurer uniformément sur toute sa surface ou dans des zones choisies 10'. La surface de l'élément d'habillage 10 est alors chauffée à une température comprise entre 700 et 1100°C pendant une durée de 30 à 180 minutes. Sous l'effet de cette température les atomes de carbone ou d'azote de l'atmosphère de l'enceinte se combinent avec la surface en céramique dans les zones 10' de l'élément d'habillage 10. Avantageusement, il s'agit d'une transformation de la surface des zones 10' de l'élément d'habillage 10 sur une certaine épaisseur en carbure ou nitrure ayant un aspect métallique de couleur proche du platine ou de l'or respectivement, sans risque de détérioration par pelage comme pourrait le faire un dépôt métallique.

Plus particulièrement, la couche superficielle 10' qui présente la structure du carbure de zirconium ou du nitrure de zirconium s'étend à partir de la surface sur une profondeur moyenne comprise entre 10 et 200 nm. Cette épaisseur présente l'avantage d'offrir à l'élément d'habillage 10 un aspect métallique tout en étant suffisamment fin pour éviter de perturber le système de communication sans fil.

Dans un second mode de réalisation visible à la figure 5, le traitement permettant à l'élément d'habillage 10 d'avoir un aspect métallique consiste à déposer une couche 10". Cette couche déposée est une couche métallique, d'oxyde, de nitrure, de carbure, de borure ou une combinaison à la surface en céramique de l'élément d'habillage 10 par une méthode de dépôt de couche par voie humide ou sous atmosphère contrôlée, de préférence PVD. Cette couche aura une épaisseur d'environ 10nm à 2-3µm.

Dans une variante de ces deux modes de réalisation, on comprendra que le traitement de l'élément d'habillage peut être réalisé sur la totalité de la surface de l'élément d'habillage ou n'être que partiel. Dans le cas où le traitement est partiel, le traitement se fera sur la surface de l'élément d'habillage qui sera visible pour l'utilisateur. En effet, pour une lunette, une partie de la surface se trouve en regard de l'épaulement de la boite de montre alors que l'autre partie de la surface est visible par l'utilisateur. Aussi, la sélectivité du traitement de l'élément d'habillage peut avoir un but esthétique, par exemple pour faire apparaître des index, des chiffres, un logo ou tout autre élément décoratif.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il pourra être prévu la présence d'un joint entre la partie inférieure et la partie supérieure de la lunette afin d'améliorer l'étanchéité.

On comprendra aussi que l'élément d'habillage peut être un maillon de bracelet, le fond d'une boite de montre ou toute autre pièce d'habillage en céramique contenant un système de communication sans fil.

## Revendications

1. Elément d'habillage (10) d'une pièce d'horlogerie ou de joaillerie, comportant un corps réalisé dans une céramique isolante, ledit corps étant agencé pour comprendre un logement (104), comprenant en outre un système de communication sans fil (102) agencé dans le logement (104) et en ce qu'au moins une partie (10') de la surface dudit élément d'habillage présente une couche d'aspect visuel métallique, ladite couche étant obtenue par carburation, nitruration ou une combinaison de ces deux procédés.

2. Elément d'habillage (10) selon la revendication 1, **caractérisé en ce que** le corps dudit élément d'habillage comprend une partie inférieure (100b) et une partie supérieure (100a) s'assemblant pour former ledit élément d'habillage, la partie inférieure et la partie supérieure étant agencées pour laisser apparaitre un logement 104 entre elles.

3. Elément d'habillage (10) selon l'une des revendications précédentes, **caractérisé en ce que** la couche d'aspect métallique a une épaisseur comprise entre 10 et 2000 nm.

4. Elément d'habillage (10) selon la revendication précédente, **caractérisé en ce que** la couche d'aspect visuel métallique a une épaisseur comprise entre 10 et 200 nm.

5. Pièce d'horlogerie (1) comprenant un boitier (2) comprenant une carrure (20) fermée par un fond (3) et une glace (4) et munie d'une lunette (100), **caractérisée en ce que** la lunette (100) est un élément d'habillage (10) selon l'une des revendications précédentes.

6. Pièce d'horlogerie selon la revendication précédente, **caractérisée en ce que** la carrure comprend un épaulement (21) défini par une paroi latérale (22) et une base (23) et dans lequel la lunette est agencée.

## Patentansprüche

1. Verkleidungselement (10) einer Uhr oder eines Schmuckstücks, umfassend einen aus einer Isolierkeramik hergestellten Körper, wobei der Körper so ausgebildet ist, dass er einen Aufnahmeraum (104) aufweist, und ferner ein drahtloses Kommunikationssystem (102) umfasst, das in dem Aufnahmeraum (104) angeordnet ist, wobei mindestens ein Teil (10') der Oberfläche des Verkleidungselements eine metallisch aussehende Schicht aufweist, und die Schicht durch Karburierung, Nitrierung oder einer Kombination beider Verfahren erhalten wird.

2. Verkleidungselement (10) nach Anspruch 1, **dadurch gekennzeichnet, dass** der Körper des Verkleidungselements einen unteren Teil (100b) und einen oberen Teil (100a) umfasst, die zusammengesetzt sind, um das Verkleidungselement zu bilden, wobei der untere Teil und der obere Teil so angeordnet sind, dass zwischen ihnen einen Aufnahmeraum (104) sichtbar ist.

3. Verkleidungselement (10) nach einem der vorhergehenden Ansprüche, **dadurch gekennzeichnet, dass** die metallisch aussehende Schicht eine Dicke im Bereich von 10 bis 2000 nm besitzt.

4. Verkleidungselement (10) nach dem vorhergehenden Anspruch, **dadurch gekennzeichnet, dass** die metallisch aussehende Schicht eine Dicke im Bereich von 10 bis 200 nm besitzt.

5. Uhr (1) mit einem Gehäuse (2), das einen durch einen Boden (3) und ein Uhrenglas (4) verschlossenen Mittelteil (20) aufweist und mit einer Lünette (100) versehen ist, **dadurch gekennzeichnet, dass** die Lünette (100) ein Verkleidungselement (10) nach einem der vorhergehenden Ansprüche ist.

6. Uhr nach dem vorhergehenden Anspruch, **dadurch gekennzeichnet, dass** der Mittelteil eine Schulter (21) aufweist, die durch eine Seitenwand (22) und eine Grundfläche (23) definiert ist und an der die Lünette angeordnet ist.

## Claims

1. An external element (10) of a timepiece or a piece of jewelry containing a body made of an insulating ceramic material, said body being arranged to comprise a housing (104), further comprising a wireless communication system (102) disposed in the housing (104), and at least one part (10') of the surface of said external element having a layer of metallic visual appearance, said layer being obtained by carburization, nitridation or a combination of these two processes.

2. The external element (10) as claimed in claim 1, **characterized in that** the body of said external element comprises a lower part (100b) and an upper part (100a) being combined to form said external element, the lower part and the upper part being arranged so as to reveal a housing 104 between them.

3. The external element (10) as claimed in one of the preceding claims, **characterized in that** the layer of metallic appearance has a thickness between 10 and 2000 nm.

4. The external element (10) as claimed in the preceding claim, **characterized in that** the layer of visual metallic appearance has a thickness between 10 and 200 nm.

5. A timepiece (1) comprising a watch case (2) comprising a case middle (20) closed by a back (3) and a watch glass (4) and equipped with a bezel (100), **characterized in that** the bezel (100) is an external element (10) according to one of the preceding claims.

6. The timepiece as claimed in the preceding claim, **characterized in that** the case middle comprises a shoulder (21) defined by a lateral wall (22) and a base (23), and in which the bezel is disposed.
